# EUROPEAN PATENT APPLICATION

(11) **EP 1 061 675 A2**
(43) Date of publication of application: **20.12.2000**
(21) Application number: 00305108.3
(22) Date of filing: 16.06.2000
(51) Int. Cl.: H04B 10/18

(54) **Wavelength-division multiplexing signal transmission system having dispersion compensation element**

(30) Priority: 17.06.1999 JP 17093999
(71) Applicant: NEC CORPORATION, Tokyo (JP)
(72) Inventor: Kuroshima, Jun, Tokyo (JP)
(74) Representative: Moir, Michael Christopher

(57) **Abstract**

Multiplexed wavelengths included in a divided signal light from a coupler (CPL) are collectively dispersion-compensated by a dispersion-compensation fiber (DCF). After extracting at least one of the multiplexed wavelengths by an arrayed-waveguide grating device (AWG), each of the extracted wavelengths is independently dispersion-compensated by another dispersion compensation fiber (DCF).

## Description

### BACKGROUND OF THE INVENTION

### 1. Field of the Invention

The present invention relates to a wavelength-division multiplexing signal transmission system, and in particular to a wavelength-division multiplexing signal transmission system having a dispersion compensation element for compensating wavelength-dispersion of a wavelength-division multiplexing signal for multiplexed wavelengths.

### 2. Description of the Related Art

A conventional wavelength-dispersion compensation system for a wavelength-multiplexing/demultiplexing optical transmission repeater employing an optical amplifier is described in Japanese Patent Unexamined Application Publication No. 9-191290. The conventional system simultaneously compensates dispersion of each wavelength of a wavelength-division multiplexing signal light, wherein each dispersion of wavelength is different from each other. The conventional wavelength-dispersion compensation system is provided with wavelength demultiplexing means for demultiplexing a wavelength multiplexing signal light into a plurality of signal lights, with each signal light having a specified wavelength different from one another, and dispersion compensation means for independently compensating each wavelength dispersion of the demultiplexed signal lights. An optical transmission line is mainly formed by a transmission optical fiber. A signal light passing through the optical fiber has a predetermined dispersion value corresponding to the wavelength of the signal light. The dispersion compensation means is formed by a dispersion compensation fiber such that a signal light passing through the dispersion compensation fiber has a dispersion value opposite in polarity to that of the signal light passing through the transmission optical fiber for each wavelength of the demultiplexed signal lights. The length of the dispersion compensation fiber for each demultiplexed signal light with the specified wavelength is preset so that the sum of the dispersion value of the transmission optical fiber and that of the dispersion compensation fiber may become almost zero. The dispersion compensation optical fiber is wound around a cable drum. According to the conventional wavelength dispersion compensation system, wavelength dispersion compensation is conducted for each wavelength of the demultiplexed signal lights. Therefore, this system has an advantage in that all of the wavelengths of the signal lights, which are different from one another in wavelength dispersion, can be simultaneously, completely dispersion-compensated.

In the conventional system, dispersion compensation is normally conducted during long-distance transmission. However, the amount of dispersion compensation fibers necessary for dispersion-compensating becomes disadvantageously large, because the dispersion compensation fiber with the appropriate amount corresponding to each wavelength of the demultiplexed signal lights is independently disposed for each of the wavelengths. A dispersion compensation fiber is expensive and requires a large accommodation. Thus, it is said that a technique for reducing the necessary amount of dispersion compensation fibers is needed.

A conventional technique intended to efficiently reduce the amount of dispersion compensation fibers is described in Japanese Patent Unexamined Application Publication No. 10-145298. This other conventional wavelength division multiplexing signal transmission system comprises optical couplers connected in many stages to branch an input wavelength multiplexing signal light into parts corresponding to the number of multiplexed wavelengths, optical filters each inserted into the first branch side of each of the optical fiber couplers, dispersion equalization fibers each inserted into the second branch side of each of the optical couplers, a final optical filter provided at the second branch side of the optical coupler on the final stage, and optical amplifiers inserted at preset positions between the optical filter provided at the second branch side of the optical coupler on the forefront stage and that provided at the second branch side of the optical coupler on the final stage.

In this conventional system, the wavelength multiplexing light signal output from the final optical filter is dispersion-compensated with the total amount of dispersion compensation of all the dispersion equalization fibers. Thus, it is possible to shorten the length of the equalization fibers as a whole in the conventional system. In addition, since the insertion length of the equalization fiber for each wavelength of the wavelength-multiplexing signal lights is not large, it is possible to reduce the attenuation of the optical signal for each wavelength. In this conventional system, however, dispersion which has only one polarity is compensated, that is, it is impossible to compensate dispersion of a wavelength multiplexing signal light with both positive and negative polarities of dispersion. Moreover, many optical devices such as optical couplers and optical filters are needed according to the number of multiplexed wavelengths, whereby rendering the structure of the conventional system complicated.

Still another conventional wavelength division multiplexing signal transmission system is described in Japanese Patent Unexamined Application Publication No. 10-170752. The conventional system comprises an optical circulator guiding a light signal from the first port to the second port and from the second port to the third port, a WDM coupler having an input port connected to the second port, dividing the light signal input from the input port for the respective wavelengths and outputting the resultant signal to a plurality of output ports, and optical reflectors optically connected through respective dispersion media to at least one of the output ports of the WDM coupler. However, this conventional system does not provide a way to resolve the above problems.

### SUMMARY OF THE INVENTION

It is therefore an object of the preferred embodiments of the present invention to provide an optical communication apparatus and method capable of reducing a necessary amount of dispersion compensation element as well as other optical devices.

Another object of the preferred embodiments of the present invention is to provide an optical communication apparatus and method capable of dispersion-compensating according to each wavelength included in multiplexed wavelengths by an appropriate amount of dispersion compensation.

An optical communication apparatus according to an aspect of the present invention comprises a coupler inputting a signal light having a plurality of multiplexed wavelengths and dividing the signal light to output a plurality of divided signal lights each having the multiplexed wavelengths, a first dispersion compensation element responsive to at least one of the divided signal lights, for collectively dispersion-compensating the multiplexed wavelengths included in the at least one of the divided signal lights to output a first dispersion-compensated signal light having the multiplexed wavelengths, a wavelength divider, responsive to the first dispersion-compensated signal light, for outputting extracted signal lights each having an extracted wavelength which is one of the multiplexed wavelengths and a second dispersion compensation element responsive to at least one of the extracted signal lights, for independently dispersion-compensating the extracted wavelength of the at least one of the extracted signal lights to output a second dispersion-compensated signal light.

A wavelength-division multiplexing communication apparatus according to another aspect of the present invention comprises a coupler inputting a signal having a plurality of multiplexed wavelengths and dividing the signal to output a plurality of divided signals each having the multiplexed wavelengths, a first dispersion compensation element responsive to at least one of the divided signals, for collectively dispersion-compensating the multiplexed wavelengths included in the at least one of the divided signals to output a first dispersion-compensated signal having the multiplexed wavelengths, a wavelength divider, responsive to the first dispersion-compensated signal, for outputting a first extracted signal, having a first wavelength of the multiplexed wavelengths, and a second extracted signal having a second wavelength of the multiplexed wavelengths, a second dispersion compensation element responsive to the first extracted signal, for independently dispersion-compensating the first wavelength to output a second dispersion-compensated signal and a third dispersion compensation element responsive to the second extracted signal, for independently dispersion-compensating the second wavelength to output a third dispersion-compensated signal.

Another optical communication apparatus according to a further aspect of the present invention comprises a coupler inputting a signal light having a plurality of multiplexed wavelengths and dividing the input signal light to output a first divided signal light and a second divided signal light, wherein each of the first and second divided signal lights have the multiplexed wavelengths, a first dispersion compensation element responsive to the first divided signal light, for collectively dispersion-compensating the multiplexed wavelengths included in the first divided signal light to output a first dispersion-compensated signal light having the multiplexed wavelengths, a second dispersion compensation element responsive to the second divided signal light, for collectively dispersion-compensating the multiplexed wavelengths included in the second divided signal light to output a second dispersion-compensated signal light having the multiplexed wavelengths, a first wavelength divider responsive to the first dispersion-compensated signal light, for outputting a first extracted signal light having a first wavelength and a second extracted signal light having a second wavelength, a second wavelength divider responsive to the second dispersion-compensated signal light, for outputting a third extracted signal light having a third wavelength and a fourth extracted signal light having a fourth wavelength, a third dispersion compensation element responsive to the first extracted signal light, for independently dispersion-compensating the first wavelength to output a third dispersion-compensated signal light, a fourth dispersion compensation element responsive to the second extracted signal light, for independently dispersion-compensating the second wavelength to output a fourth dispersion-compensated signal light, a fifth dispersion compensation element responsive to the third extracted signal light, for independently dispersion-compensating the third wavelength to output a fifth dispersion-compensated signal light and a sixth dispersion compensation element responsive to the fourth extracted signal light, for independently dispersion-compensating the fourth wavelength to output a sixth dispersion-compensated signal light.

An optical communication method according to another aspect of the present invention comprises dividing an input signal light having a plurality of multiplexed wavelengths to output a plurality of divided signal lights each having the multiplexed wavelengths, collectively dispersion-compensating the multiplexed wavelengths included in the divided signal lights to output a first dispersion-compensated signal light having the multiplexed wavelengths, extracting, from the first dispersion-compensated signal light, extracted signal lights, each of the extracted signal lights having one of the multiplexed wavelengths and independently dispersion-compensating a wavelength of at least one of the extracted signal lights to output a second dispersion-compensated signal light.

### BRIEF DESCRIPTION OF THE DRAWINGS

Preferred features of the present invention will now be described, by way of example only, with reference to the accompanying drawings, in which:
FIG. 1 is a block diagram showing the first embodiment of a wavelength-division multiplexing signal transmission system according to the present invention;
FIG. 2 is a block diagram showing a conventional wavelength-division multiplexing signal transmission system, wherein the same amount of dispersion as that of the first embodiment of the present invention shown in FIG. 1 is compensated;
FIG. 3 is a block diagram showing the second embodiment of a wavelength-division multiplexing signal transmission system according to the present invention;
FIG. 4 is a block diagram showing another conventional wavelength-division multiplexing signal transmission system, wherein the same amount of dispersion as that of the second embodiment of the present invention shown in FIG. 3 is compensated; and,
FIG. 5 is a block diagram showing a part of still another conventional wavelength-division multiplexing signal transmission system.

### DETAILED DESCRIPTION OF THE PREFERRED EMBODIMENTS

### 1. First Embodiment

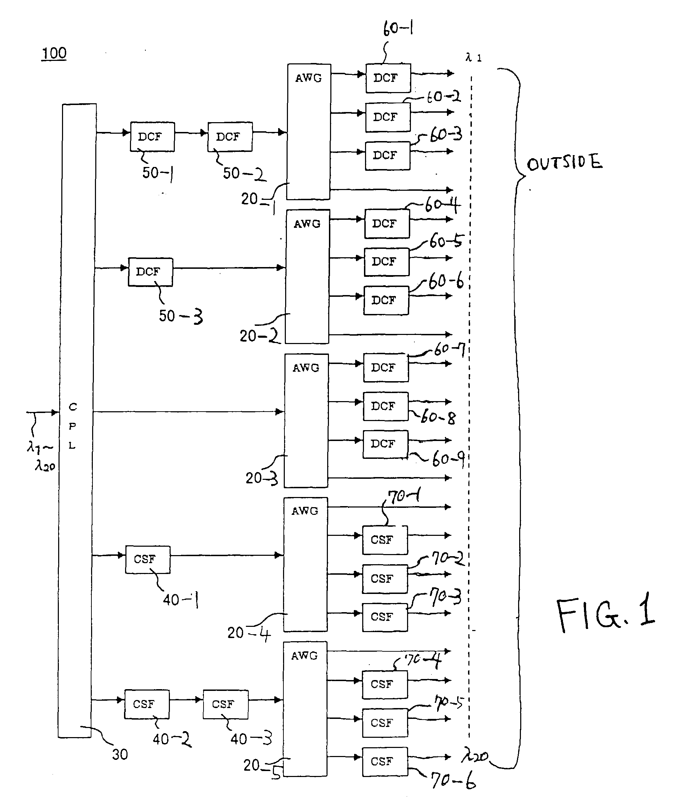

Description will be given of the first embodiment according to the present invention based on FIG. 1 showing a wavelength-division multiplexing signal transmission system with a dispersion compensation element. In FIG. 1, the wavelength-division multiplexing signal transmission system 100 comprises one or a plurality of arrayed waveguide grating-type optical coupling and branching devices (AWG) 20-1 to 20-5, an optical coupler (CPL) 30 into which a plurality of different wavelengths λ1,..., λn (n=1, 2, 3,......) are input, one or a plurality of cutoff shifted fibers (CSF) 40-1 to 40-3 and 70-1 to 70-6, one or a plurality of dispersion-compensation fibers (DCF) 50-1 to 50-3 and 60-1 to 60-9. In wavelength-division multiplexing (WDM) signal transmission, a signal light having wavelengths λ1 to λn which is input to the CPL 30 is divided into N (N=2, 3, 4,......) groups according to at least one of the polarity of dispersion and the amount of dispersion for each wavelength. Dispersion compensation is collectively conducted to each group and then conducted to each of the wavelengths after demultiplexing of the wavelengths.

Specifically, in the system 100 shown in FIG. 1, the input signal light having wavelengths λ1 to λ20, i.e. n=20, for the WDM signal transmission is branched by the CPL 30 into first to fifth groups of the signal light with wavelengths λ1 to λ20 based on polarity of wavelength dispersion and an amount of wavelength dispersion. First group of the branched signal light is supplied to the AWG 20-1 through the DCFs 50-1 and 50-2. The DCFs 50-1 and 50-2 dispersion-compensate each of the wavelengths λ1 to λ20 included in the branched signal light input from the CPL 30 by a predetermined amount of dispersion and then feed the dispersion-compensated signal light to the AWG 20-1. The AWG 20-1 extracts predetermined wavelengths λ1 to λ4 from the wavelengths λ1 to λ20 included in the dispersion-compensated signal light to output each signal light having the wavelengths λ1 to λ4. The signal lights having the wavelengths λ1 to λ3 are dispersion-compensated by the DCFs 60-1 to 60-3, respectively. The signal light having the wavelength λ4 is output outside from the system 100 without additional dispersion compensation. Each of the dispersion amount compensated by the DCFs 60-1 to 60-3 is preset according to the dispersion amount to be compensated for each of the wavelengths λ1 to λ3.

Similarly, second group of the branched signal light is supplied to the AWG 20-2 through the DCF 50-3. The DCF 50-3 dispersion-compensates each of the wavelengths λ1 to λ20 included in the branched signal light input from the CPL 30 by a predetermined amount of dispersion and then feeds the dispersion-compensated signal light to the AWG 20-2. The dispersion amount compensated by the DCF 50-3 for the second group of the branched signal light is less than that compensated by the DCFs 50-1 and 50-2 for the first group of the branched signal light. The AWG 20-2 extracts predetermined wavelengths λ5 to λ8 from the wavelengths λ1 to λ20 included in the dispersion-compensated signal light to output each signal light having the wavelengths λ5 to λ8. The signal lights having the wavelengths λ5 to λ7 are dispersion-compensated by the DCFs 60-4 to 60-6, respectively. The signal light having the wavelength λ8 is output outside from the system 100 without additional dispersion compensation. Each of the dispersion amount compensated by the DCFs 60-4 to 60-6 is preset according to the dispersion amount to be compensated for each of the wavelengths λ5 to λ7.

Third group of the branched signal light is supplied to the AWG 20-3 without dispersion-compensating between the CPL 30 and AWG 20-3. The AWG 20-3 extracts predetermined wavelengths λ9 to λ12 from the wavelengths λ1 to λ20 included in the dispersion-compensated signal light to output each signal light having the wavelengths λ9 to λ12. The signal lights having the wavelengths λ9 to λ11 are dispersion-compensated by the DCFs 60-7 to 60-9, respectively. The signal light having the wavelength X12 is output outside from the system 100 without additional dispersion compensation. Each of the dispersion amount compensated by the DCFs 60-7 to 60-9 is preset according to the dispersion amount to be compensated for each of the wavelengths λ9 to λ11.

On the other hand, fourth group of the branched signal light is supplied to the AWG 20-4 through the CSF 40-1. The CSF 40-1 dispersion-compensates each of the wavelengths λ1 to λ20 by a predetermined amount of dispersion at the opposite polarity to that of each of the DCFs 50-1 to 50-3 and then feed the dispersion-compensated signal light to the AWG 20-5. The AWG 20-4 extracts predetermined wavelengths λ13 to λ16 from the wavelengths λ1 to λ20 included in the dispersion-compensated signal light to output each signal light having the wavelengths λ13 to λ16. The signal lights having the wavelengths λ14 to λ16 are dispersion-compensated by the CSFs 70-1 to 70-3, respectively. The signal light having the wavelength λ13 is output outside from the system 100 without additional dispersion compensation. Each of the dispersion amounts compensated by the CSFs 70-1 to 70-3 is preset according to the dispersion amount to be compensated for each of the wavelengths λ14 to λ16.

Fifth group of the branched signal light is supplied to the AWG 20-5 through the CSFs 40-2 and 40-3. The CSFs 40-2 and 40-3 dispersion-compensate each of the wavelengths λ1 to λ20 by a predetermined amount of dispersion at the opposite polarity to that of each of the DCFs 50-1 to 50-3, and then feed the dispersion-compensated signal light to the AWG 20-5. The dispersion amount compensated by the CSF 40-1 for the fourth group of the branched signal light is less than that compensated by the CSFs 40-2 and 40-3 for the fifth group of the branched signal light. The AWG 20-5 extracts predetermined wavelengths λ17 to λ20 from the wavelengths λ1 to λ20 included in the dispersion-compensated signal light to output each signal light having the wavelengths λ17 to λ20. The signal lights having the wavelengths λ18 to λ20 are dispersion-compensated by the CSFs 70-4 to 70-6, respectively. The signal light having the wavelength λ17 is output outside from the system 100 without additional dispersion compensation. Each of the dispersion amounts compensated by the CSFs 70-4 to 70-6 is preset according to the dispersion amount to be compensated for each of the wavelengths λ18 to λ20.

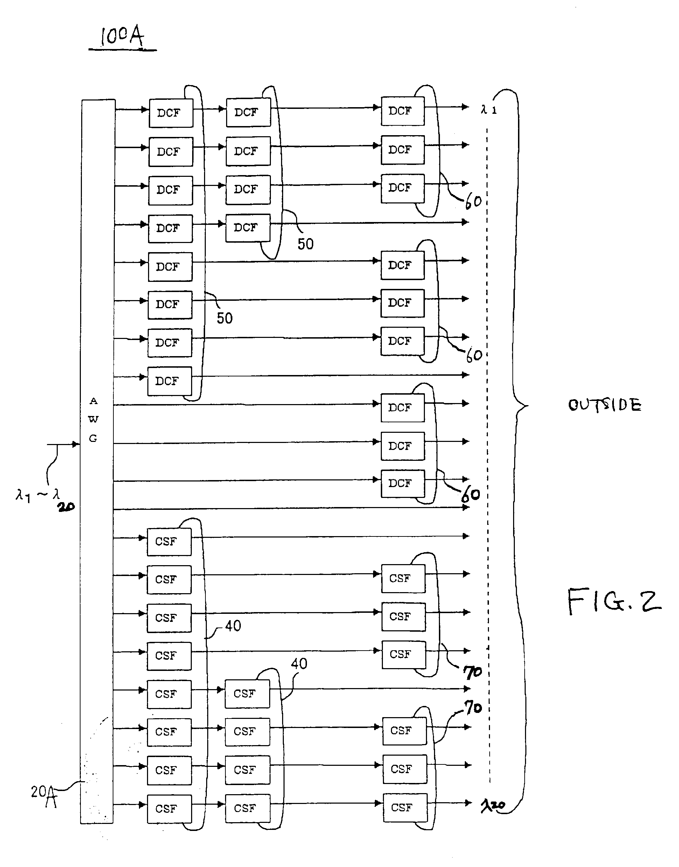

In FIG. 2 which shows modification to the system 100 shown in FIG. 1, no DCFs or CSFs are disposed before an input signal light having wavelengths λ1 to λ20 is divided into signal lights, respectively, having wavelengths λ1 to λ20 by an AWG 20A. Thus, while both positive and negative polarity of wavelength dispersion can be compensated, DCFs 50 and 60 and CSFs 40 and 70 greater than that used in the system 100 shown in FIG. 1 are required.

As can be seen from the above description, according to the first embodiment of the present invention, in the WDM transmission, the wavelengths λ1 to An (e.g. n=20) included in the input signal light are divided into N (e.g. N=5) groups in accordance with the polarity and the amount of wavelength dispersion to be compensated. Dispersion compensation is conducted collectively for each of the divided groups, respectively. Then, additional dispersion compensation is conducted to each of the wavelengths extracted by the AWG. Due to this two-step dispersion compensation, compared with the conventional method for conducting dispersion compensation for each of the wavelengths without collective dispersion compensation, the amount of the DCF as well as other optical devices can be advantageously reduced.

### 2. Second Embodiment

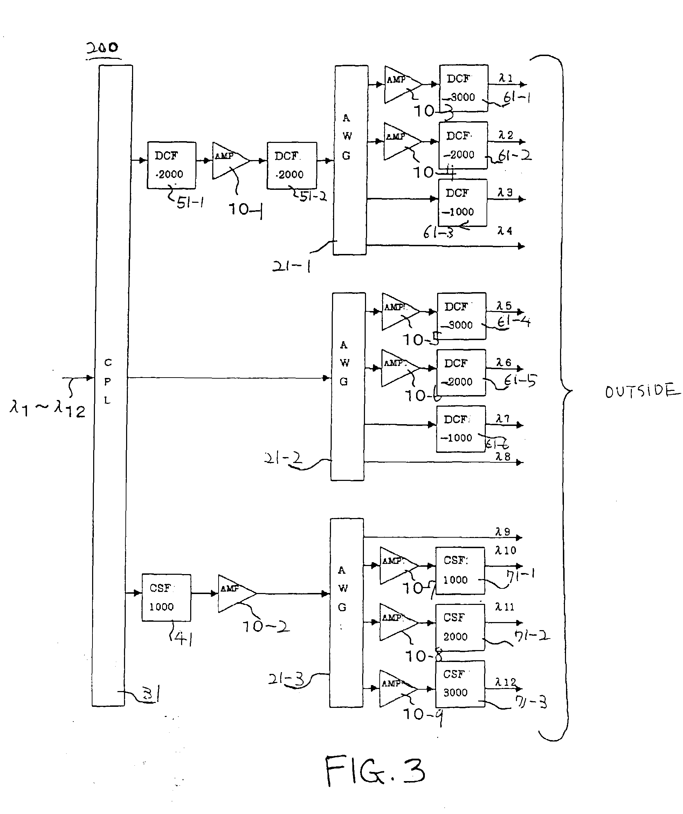

Next, description will be given to the second embodiment according to the present invention with reference to FIG. 3.

A signal light having wavelengths λ1 to λ12 is input to a CPL 31. Dispersion compensation amounts required for each of the wavelengths λ1 to λ12 are set as follows.
Wavelength λ1: -7000 ps/nm
Wavelength λ2: -6000 ps/nm
Wavelength λ3: -5000 ps/nm
Wavelength λ4: -4000 ps/nm
Wavelength λ5: -3000 ps/nm
Wavelength λ6: -2000 ps/nm
Wavelength λ7: -1000 ps/nm
Wavelength λ8: 0 ps/nm
Wavelength λ9: 1000 ps/nm
Wavelength λ10: 2000 ps/nm
Wavelength λ11: 3000 ps/nm
Wavelength λ12: 4000 ps/nm

Referring to FIG. 3, a wavelength division multiplexing signal transmission system 200 comprises optical amplifiers (AMP) 10-1 to 10-9, arrayed waveguide grating type optical coupling and branching devices (AWGs) 21-1 to 21-3, an optical coupler (CPL) 31, cutoff-shifted fibers (CSFs) 41 and 71-1 to 71-3 and dispersion compensation fibers (DCFs) 51-1 to 51-2 and 61-1 to 61-6.

The signal light having the wavelengths λ1 to λ12 is branched by the CPL 31 and then fed to the DCF 51-1, the AWG 21-2 and the CSF 41.

The DCF 51-1 dispersion-compensates each of the wavelengths λ1 to λ12 included in the input signal light by -2000 ps/nm and then feeds the signal light to the AMP 10-1. The AMP 10-1 collectively amplifies each of the wavelengths λ1 to λ12 included in the signal light and attenuated when the signal light is passed through the DCF 51-1. Then, the AMP 10-1 feeds the amplified signal light to the DCF 51-2.

The DCF 51-2 dispersion-compensates each of the wavelengths λ1 to λ12 included in the amplified signal light from the AMP 10-1 by -2000 ps/nm and then feeds the signal light to the AWG 21-1.

The AWG 21-1 extracts four wavelengths, i.e., the wavelengths λ1, λ2, λ3 and λ4 from the wavelengths λ1 to λ12 included in the signal light from the DCF 51-2 and outputs the extracted wavelengths λ1, λ2, λ3 and λ4 to the AMP 10-3, the AMP 10-4, the DCF 61-3 and to the outside of the apparatus directly, respectively. The AMP 10-3 amplifies the wavelength λ1 included in the signal light and attenuated when the signal light is passed through the DCF 51-2 and the AWG 21-1, and outputs the amplified signal light to the DCF 61-1. The DCF 61-1 dispersion-compensates the wavelength λ1 included in the signal light by -3000 ps/nm to output the dispersion-compensated signal light to the outside of the apparatus.

The AMP 10-4 amplifies the wavelength λ2 included in the signal light and attenuated when the light is passed through the DCF 51-2 and the AWG 21-1, and outputs the amplified signal light to the DCF 61-2. The DCF 61-2 dispersion-compensates the wavelength λ2 included in the signal light by -2000 ps/nm to output the dispersion-compensated signal light to the outside of the apparatus. Likewise, the signal light inputted to the DCF 61-3 is outputted to the outside of the apparatus after the wavelength λ3 included in the signal light is dispersion-compensated by -1000 ps/nm by the DCF 61-3.

The AWG 21-2 extracts four wavelengths, i.e., the wavelengths λ5, λ6, λ7 and λ8 from the wavelengths λ1 to λ12 included in the signal light from the CPL 31 and outputs the extracted wavelengths λ5, λ6, λ7 and λ8 to the AMP 10-5, the AMP 10-6, the DCF 61-6 and to the outside of the apparatus directly, respectively. The AMP 10-5 amplifies the wavelength λ5 included in the signal light and attenuated when the signal light is passed through the AWG 21-2, and outputs the amplified signal light to the DCF 61-4. The DCF 61-4 dispersion-compensates the wavelength λ5 included in the signal light by -3000 ps/nm to output the dispersion-compensated signal light to the outside of the apparatus.

The AMP 10-6 amplifies the wavelength λ6 included in the signal light and attenuated when the signal light is passed through the AWG 21-2, and outputs the amplified signal light to the DCF 61-5. The DCF 61-5 dispersion-compensates the wavelength λ6 included in the signal light by -2000 ps/nm to output the dispersion-compensated signal light to the outside of the apparatus. Likewise, the signal light inputted to the DCF 61-6 is outputted to the outside of the apparatus after the wavelength λ7 included in the signal light is dispersion-compensated by -1000 ps/nm by the DCF 61-6.

The CSF 41 dispersion-compensates each of the wavelengths λ1 to λ12 included in the input signal light by 1000 ps/nm and then feeds the signal light to the AMP 10-2. The AMP 10-2 amplifies each of the wavelengths λ1 to X12 included in the signal light and attenuated when the signal light is passed through the CSF 41 and feeds the amplified signal light to the AWG 21-3.

The AWG 21-3 extracts four wavelengths, i.e., the wavelengths λ9, λ10, λ11 and λ12 from the wavelengths λ1 to X12 included in the signal light and outputs the extracted wavelengths λ9, λ10, λ11 and λ12 to the outside of the apparatus directly, the AMP 10-7, the AMP 10-8 and the AMP 10-9. The AMP 10-7 amplifies the wavelength λ10 included in the signal light and attenuated when the signal light is passed through the CSF 41 and the AWG 21-3, and outputs the amplified signal light to the CSF 71-1. The CSF 71-1 dispersion-compensates the wavelength λ10 included in the signal light by 1000 ps/nm to output the dispersion-compensated signal light to the outside of the apparatus.

The AMP 10-8 amplifies the wavelength λ11 included in the signal light and attenuated when the signal light is passed through the CSF 41 and the AWG 21-3, and outputs the amplified signal light to the CSF 71-2. The CSF 71-2 dispersion-compensates the wavelength λ11 included in the signal light by 2000 ps/nm to output the dispersion-compensated signal light to the outside of the apparatus.

The AMP 10-9 amplifies the wavelength λ12 included in the signal light and attenuated when the signal light is passed through the CSF 41 and the AWG 21-3, and outputs the amplified signal light to the CSF 71-3. The CSF 71-3 dispersion-compensates the wavelength λ11 included in the signal light by 3000 ps/nm to output the dispersion-compensated signal light to the outside of the apparatus.

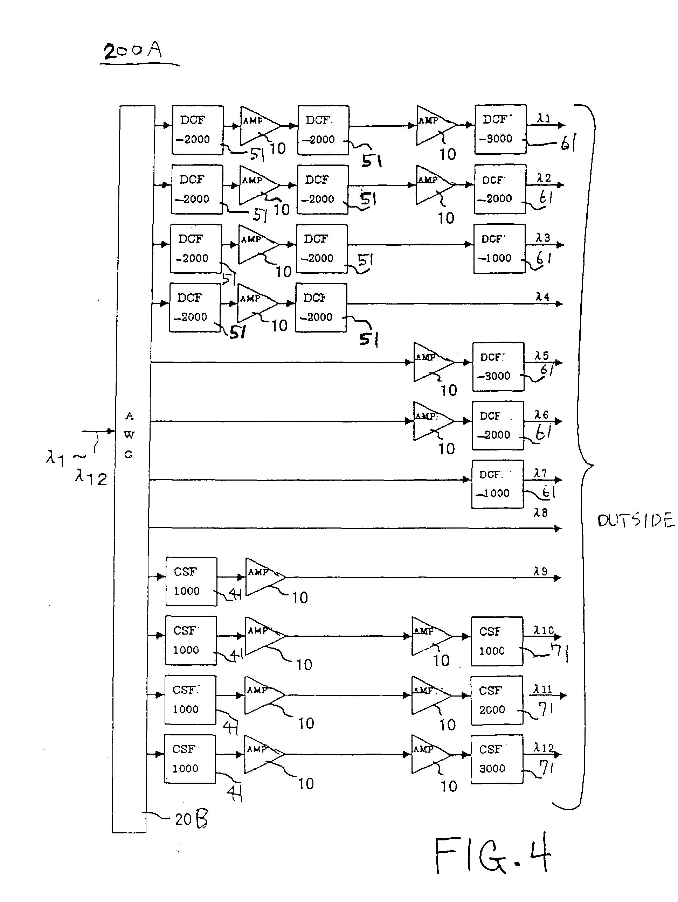

In FIG. 4,which shows modification to the system 200 shown in FIG. 3, no DCFs or CSFs are disposed before an input signal light having wavelengths λ1 to λ12 is divided into signal lights, respectively, having wavelengths λ1 to λ12 by an AWG 20B. Thus, while both of positive and negative polarity of wavelength dispersion can be compensated, DCFs 50 and 60 and CSFs 40 and 70 greater than that used in the system 200 shown in FIG. 3 are required.

In FIG. 4, dispersion compensation amounts required are -28000 ps/nm for the DCFs 50 and 10000 ps/nm for the CSFs 40. Referring back to FIG. 3, the second embodiment realizes the equivalent dispersion compensation with - 16000 ps/nm for DCFs 51-1 to 51-2 and 61-1 to 61-6 and with 7000 ps/nm for the CSFs 41 and 71-1 to 71-3.

It is noted that the positions of the AMPs 10 and 10-1 to 10-9 in FIGS. 3 and 4 are determined by the attenuation of a light signal passed through optical devices and that they are not necessarily arranged as shown therein. As can be seen from the above description, the second embodiment exhibits the same advantage as that of the first embodiment.

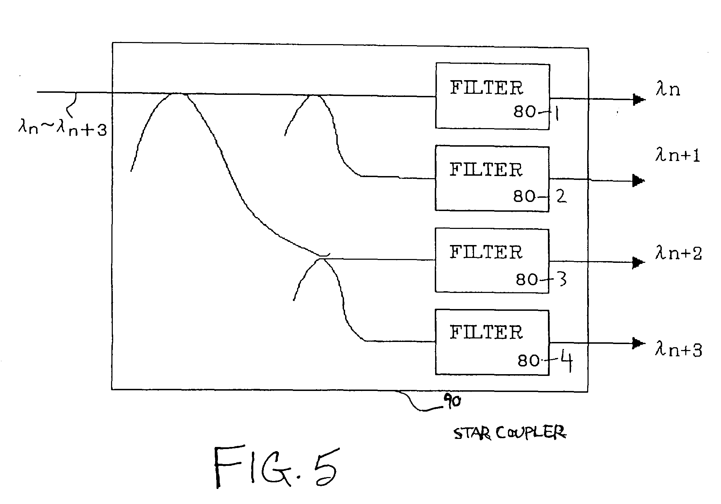

In FIG. 5, another modification to the second embodiment shown in FIG. 3 is described. Referring to FIG. 5, a star coupler 90 comprises four optical filters 80-1 to 80-2. An input signal having the wavelengths λn to λn+3 is branched into four signal lights and supplied to the optical filters 80-1 to 80-4. The optical filters 80-1 to 80-4 extract one of the wavelengths λn to λn+3 and output the extracted wavelength. The star coupler 90 shown in FIG. 5 can be used instead of the AWGs 21-1 to 21-3 shown in FIG. 3.

The invention may be embodied in other specific forms without departing from the essential characteristics thereof. The present invention embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

Each feature disclosed in this specification (which term includes the claims) and/or shown in the drawings may be incorporated in the invention independently of other disclosed and/or illustrated features.

The text of the abstract filed herewith is repeated here as part of the specification.

Multiplexed wavelengths included in a divided signal light from a coupler (CPL) are collectively dispersion-compensated by a dispersion-compensation fiber (DCF). After extracting at least one of the multiplexed wavelengths by an arrayed-waveguide grating device (AWG), each of the extracted wavelengths is independently dispersion-compensated by another dispersion compensation fiber (DCF).

## Claims

1. An optical communication apparatus, comprising:
a coupler inputting a signal light having a plurality of multiplexed wavelengths and dividing the signal to output a plurality of divided signal lights each having the multiplexed wavelengths;
a first dispersion compensation element responsive to at least one of the divided signal lights for collectively dispersion-compensating the multiplexed wavelengths included in the at least one of the divided signal lights to output a first dispersion-compensated signal light having the multiplexed wavelengths;
a wavelength divider, responsive to the first dispersion-compensated signal light, for outputting extracted signal lights each having an extracted wavelength which is one of the multiplexed wavelengths; and,
a second dispersion compensation element responsive to at least one of the extracted signal lights, for independently dispersion-compensating the extracted wavelength of the at least one of the extracted signal lights to output a second dispersion-compensated signal light.

2. The apparatus as claimed in claim 1, wherein said coupler divides the input signal light according to a polarity of dispersion of the multiplexed wavelengths thereby outputting at least two of the divided signal lights.

3. The apparatus as claimed in claim 1, wherein said coupler divides the input signal light according to an amount of dispersion of the multiplexed wavelengths.

4. The apparatus as claimed in claim 1, wherein wavelength of the second dispersion-compensated signal light has been dispersion-compensated by the sum of an amount of dispersion compensation of said first dispersion compensation element and said second dispersion compensation element.

5. The apparatus as claimed in claim 1, wherein both said first dispersion compensation element and said second dispersion compensation element comprise a dispersion compensation fiber.

6. The apparatus as claimed in claim 1, wherein both said first dispersion compensation element and said second dispersion compensation element comprise a cutoff shifted fiber.

7. The apparatus as claimed in claim 1, wherein said first dispersion compensation element comprises at least one of a first dispersion compensation fiber and a second cutoff-shifted fiber.

8. The apparatus as claimed in claim 7, wherein said first dispersion compensation fiber dispersion-compensates the multiplexed wavelengths, included in a first divided signal of the divided signals, by a first polarity, and said first cutoff-shifted fiber dispersion-compensates the multiplexed wavelengths, included in a second divided signal of the divided signals, by a second polarity, and
wherein said first polarity is opposite to said second polarity.

9. The apparatus as claimed in claim 7, wherein
said second dispersion compensation element comprises at least one of a second dispersion compensation fiber and a second cutoff-shifted fiber, and
a polarity of dispersion compensation by said second dispersion compensation fiber is opposite to a polarity of dispersion compensation by said second cutoff-shifted fiber.

10. The apparatus as claimed in claim 1, wherein said wavelength divider comprises an arrayed waveguide grating optical coupling and branching device.

11. The apparatus as claimed in claim 1, further comprising a first optical amplifier for amplifying the first dispersion-compensated signal light.

12. The apparatus as claimed in claim 11, wherein said first optical amplifier is disposed between said first dispersion compensation element and said wavelength divider.

13. The apparatus as claimed in claim 11, further comprising a second optical amplifier for amplifying one of the extracted signal lights output from said wavelength divider.

14. The apparatus as claimed in claim 13, wherein said second optical amplifier is disposed between said wavelength divider and said second dispersion compensation element.

15. The apparatus as claimed in claim 1, wherein the extracted signals output by the wavelength divider are a first extracted signal having a first wavelength of the multiplexed wavelengths, and a second extracted signal having a second wavelength of the multiplexed wavelengths, wherein the second dispersion compensation element is responsive to the first extracted signal for outputting the second dispersion compensated signal, and wherein the apparatus also comprises:
a third dispersion compensation element responsive to the second extracted signal for independently dispersion-compensating the second wavelength to output a third dispersion-compensated signal.

16. The apparatus as claimed in claim 15, wherein an amount of dispersion compensation by said second dispersion compensation element is different from an amount of dispersion compensation by said third dispersion compensation element.

17. The apparatus as claimed in claim 1, wherein:
the coupler divides the signal to output a first divided signal and a second divided signal;
the first dispersion compensation element is responsive to the first divided signal;
the wavelength divider outputs a first extracted signal having a first wavelength and a second extracted signal having a second wavelength; and wherein the communication apparatus also comprises:
a second dispersion compensation element which is responsive to the second divided signal, for collectively dispersion-compensating the multiplexed wavelengths included in the second divided signal to output a second dispersion-compensated signal having the multiplexed wavelengths;
a second wavelength divider, responsive to the second dispersion-compensated signal, for outputting a third extracted signal having a third wavelength and a fourth extracted signal having a fourth wavelength;
a third dispersion compensation element responsive to the first extracted light signal, for independently dispersion-compensating the first wavelength to output a third dispersion-compensated signal;
a fourth dispersion compensation element responsive to the second extracted light signal, for independently dispersion-compensating the second wavelength to output a fourth dispersion-compensated signal;
a fifth dispersion compensation element responsive to the third extracted light signal, for independently dispersion-compensating the third wavelength to output a fifth dispersion-compensated signal; and,
a sixth dispersion compensation element responsive to the fourth extracted light signal, for independently dispersion-compensating the fourth wavelength to output a sixth dispersion-compensated signal.

18. The apparatus as claimed in claim 17, wherein a polarity of dispersion compensation by said first dispersion compensation element is opposite to a polarity of dispersion compensation by said second dispersion compensation element.

19. The apparatus as claimed in claim 17, wherein polarities of dispersion compensation by said third and fourth dispersion compensation elements are opposite to polarities of dispersion compensation by said fifth and sixth dispersion compensation elements.

20. The apparatus as claimed in claim 17, wherein an amount of dispersion compensation by said third dispersion compensation element is different from an amount of dispersion compensation by said fourth dispersion compensation element.

21. The apparatus as claimed in claim 17, wherein an amount of dispersion compensation by said fifth dispersion compensation element is different from an amount of dispersion compensation by said sixth dispersion compensation element.

22. The apparatus as claimed in any preceding claim, wherein each signal is a light signal.

23. An optical communication method, comprising:
dividing an input signal light having a plurality of multiplexed wavelengths to output a plurality of divided signal lights each having the multiplexed wavelengths;
collectively dispersion-compensating the multiplexed wavelengths included in the divided signal lights to output a first dispersion-compensated signal light having the multiplexed wavelengths;
extracting, from the first dispersion-compensated signal light, extracted signal lights, each of said extracted signal lights having one of the multiplexed wavelengths; and
independently dispersion-compensating a wavelength of at least one of said extracted signal lights to output a second dispersion-compensated signal light.

24. The method as claimed in claim 23, further comprising: amplifying the first dispersion compensation signal light.

25. The method as claimed in claim 23, further comprising: amplifying at least one of the extracted signal lights.
